# EUROPEAN PATENT APPLICATION

(11) **EP 2 989 927 A1**
(43) Date of publication of application: **02.03.2016**
(21) Application number: 14182480.5
(22) Date of filing: 27.08.2014
(51) Int. Cl.: A46B 15/00, A46B 9/04, A61C 17/22

(54) **Automatic tooth brush**

(71) Applicant: Spranger, Nimrod, 82057 Icking (DE)
(72) Inventor: Spranger, Claudia, 82057 Icking (DE)

(57) **Abstract**

The invention is an apparatus for cleaning and examining human teeth. The apparatus uses a clamping mechanism to position itself between the teeth (figure 0) and a number of brushes, sensors and actuators to enable the efficient cleaning and monitoring of the teeth. The apparatus is sitting between the upper and lower row of teeth and is capable of moving along the row of teeth to the left or to the right. The actual teeth cleaning process takes place with the help of six brushes. Two actuators adjust the location of the outer brushes using sensor signals. A wireless communication module enables communication to external devices. An electric motor and a battery pack provide power to the brushes, the actuators, the crawler wheel, the wireless module and the sensors. The main parts of the apparatus (figure 3) is the crawling wheel, the brushes, the electric motor, the battery pack, the sensors and the wireless communication module. A micro controller coordinates and runs programs relating the individual parts of the apparatus. The purpose of the apparatus is the efficient cleaning of teeth, the examination of teeth and other diseases with use of sensors and communication to external devices.

## Description

### 2. BACKGROUND OF THE INVENTION

### A. Field of the Invention

The present invention relates to dental hygiene, and more particular to a method and an apparatus for cleaning and examining teeth.

### B. Description of Prior Art

A teeth cleansing tool is a device to clean human teeth in order to prevent common infections and health problems such as caries. This is normally being done by removing debris and remains of food from the teeth. Current development sees a change from simple hand held tooth brushes to motor-enabled tooth brushes facilitating the cleansing. The brush usually rotates about its own axis to enable a better efficiency while still being held by an operator via a handle. In order to clean the teeth, the operator guides the brush to each tooth, while the brush is rotating about its axis. In general, the assembly consists of a brush, which is attached to a body via a bearing. The body usually consists of the motor with drive train to the brush, a handle for the operator and an interface (usually 1-3 buttons).

Whereas the efficiency of these tools has improved during the last years, they are still guided by the operator making their efficiency dependent on the operator. Using one brush for all teeth and guiding the brush to each tooth in sequence requires time and agility. After usage, the operator cannot be sure of the outcome, the cleanliness of the teeth and the status of the teeth. Automation is limited to the rotating brush.

### 3. SUMMARY OF THE INVENTION

A primary object of the present invention is to provide means to clean teeth efficiently by using an automated process. The duration of the cleansing process should be reduced. Also, the invention is to provide the necessary hardware (such as sensors, motors, controllers) to enable in-process examination of the teeth or other body parts. The invention should provide for the ability to sent teeth related information to external devices with the use of a micro-controller and a wireless module. It should be able to communicate with these devices to exchange information and receive commands.

In order to achieve the objectives mentioned above, the present invention provides an apparatus for cleaning and examining the teeth. It comprises a "crawling wheel" like device, which moves between the top and bottom teeth along the line of teeth and is intended as the main means of movement for the apparatus as a whole in between the upper row and the lower row of teeth. This movement is necessary to reach all of the teeth, from the front cutting teeth to the back grinding teeth. The movement is intended to be bidirectional, the apparatus can go for and back along the row of teeth and between the top and bottom row of teeth. The actual cleaning process is done by six rotating brushes, which partly also take part in the clamping mechanism. The clamping mechanism ensures that the apparatus can move between the teeth in a stable and secure way. It works by clamping the brushes on the outside of the teeth and the brushes on the inside of the teeth against the teeth. Piezo-actuators enable an efficient and automatic adjustment of the vertical position of the four top and bottom brushes, while the crawling wheel is running and the apparatus is moving between the top row and the bottom row of teeth. The brushes and the crawling wheel are operated by an electric motor, which provides torque to the brushes and, via a planetary gear arrangement, torque to the crawling wheel. Additional parts provide means of achieving efficient cleaning and monitoring: A micro controller, sensors, a battery pack and a wireless communication module.

It is to be understood that both the foregoing general description and the following detailed description are exemplary, and are intended to provide further explanation of the invention as claimed. Other advantages and features of the invention will be apparent from the following description, drawings and claims.

### 4. BRIEF DESCRIPTION OF DRAWING

The features of the invention believed to be novel are set forth with particularity in the appended claims. The invention itself, however, may be best understood by reference to the following detailed description of the invention, which describes an exemplary concept embodiment of the invention, taken in conjunction with the accompanying drawings, in which:
Fig. 0 shows the setup of the apparatus in a model of the human teeth
Fig. 1 is a 3D drawing of the apparatus
Fig. 2 is a 3D drawing of the apparatus without casing
Fig. 3 is a side view of the apparatus without casing
Fig. 4 is a front view of the apparatus without casing
Fig. 5 is a 3D drawing of the crawler wheel
Fig. 6 is a 3D drawing of the piezo actuator
Fig. 7 is a 3D drawing of the apparatus excluding casing, gear box, electric motor, battery pack, wireless communication module and crawler wheel
Fig. 8 is a 3D drawing of the piezo position within the apparatus
Fig. 9 is a front view of the setup of the outer brush system
Fig. 10 is a side view of the gear mechanics
Fig. 11 -13 are detailed 3D drawings of the gear mechanics
Fig. 14 is a 3D drawing showing the power flow from the power source to the actuators

### 5. DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

### A. Description of at least one way of carrying out the invention

The apparatus can be hand-inserted into the mouth area. It should be positioned in a way that the top row of teeth is between the top brushes and the bottom row of teeth is between the bottom brushes. The apparatus waits for a pressure sensor to indicate that the teeth are exerting sufficient pressure on the apparatus. They do this by "biting down" onto the crawler wheel. This is mandatory for the apparatus to move and once pressure stops, the controller will stop the apparatus as well. The pressure will trigger the program of the micro controller to initiate setup. The setup will include an evaluation of the current position of the apparatus within the mouth area using appropriate sensing equipment. The controller activates the piezo actuators to extend the upper and lower brushes to the correct teeth position. This will also engage the mechanical clamping system to clamp the teeth between the apparatus. The apparatus is now stable and the main program can be run. The electric motor is activated engaging the brushes and the crawler wheels. The apparatus moves along the row of teeth to the left while the six brushes clean the teeth. The piezo actuators are adjusting the vertical position of the upper and lower brushes according to the apparatus position and the distance to the center of teeth. The further outward the apparatus moves, the more they will retract the brushes due to the smaller grinding teeth. At the end of the row of teeth, sensors trigger a stop of movement and the controller reverses the direction of rotation of the electric motor. The apparatus moves to the right and is again stopped at the end of the row of teeth. It moves back to the original position, retracts the upper and lower brushes with the help of the piezo actuators and the apparatus can be taken out of the mouth area.

### B. Figures

Was moved to a separate document entitled "Figures" as requested.

### C. Detailed description of invention

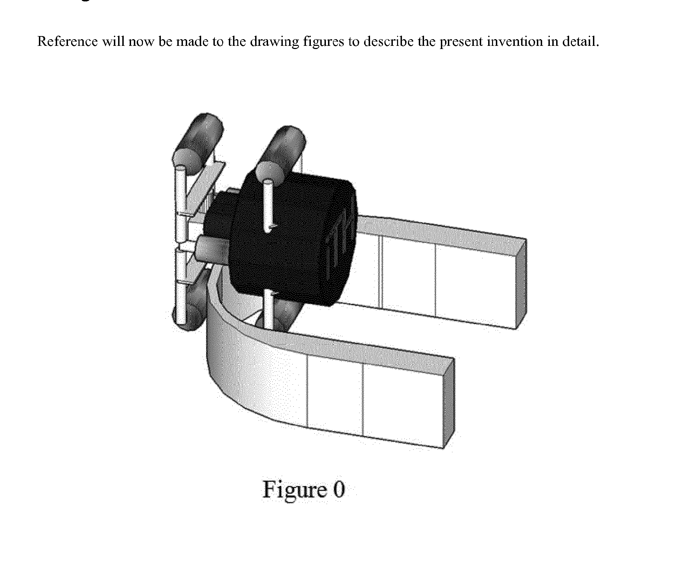

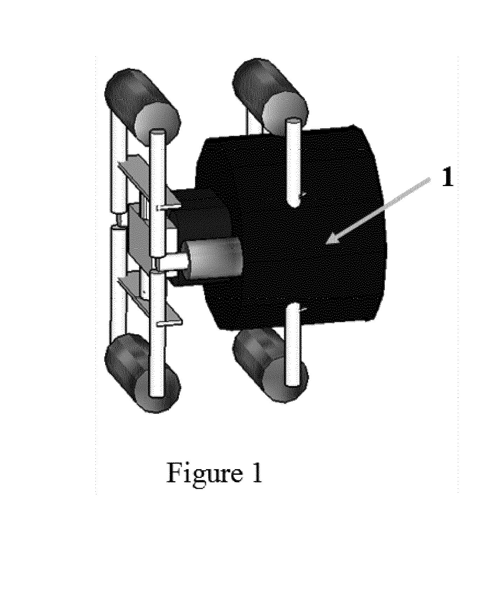

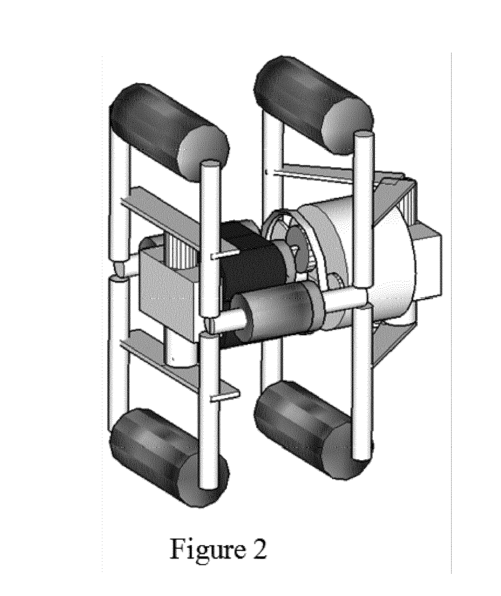

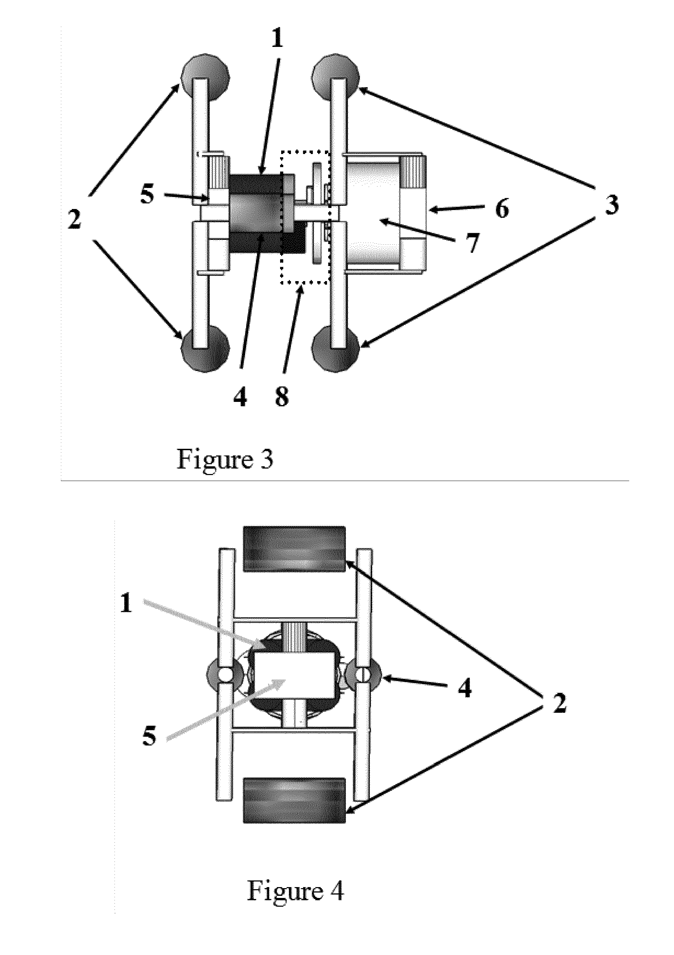

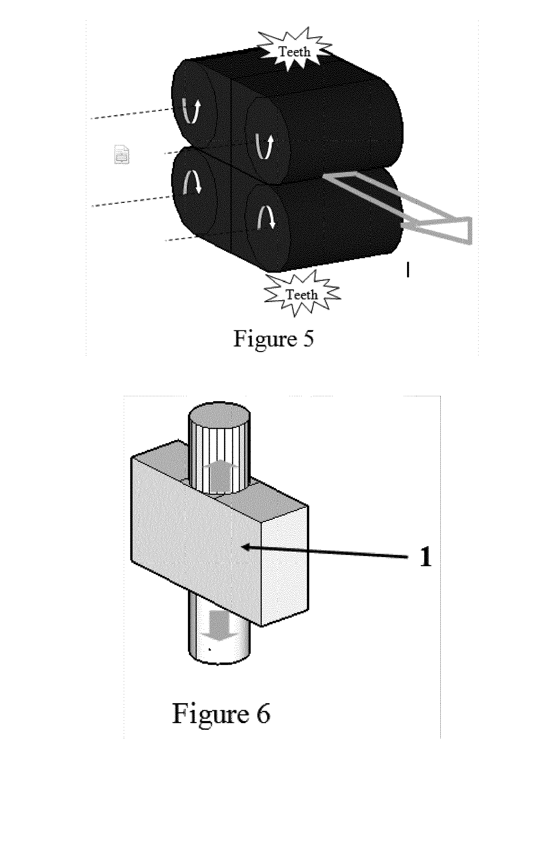

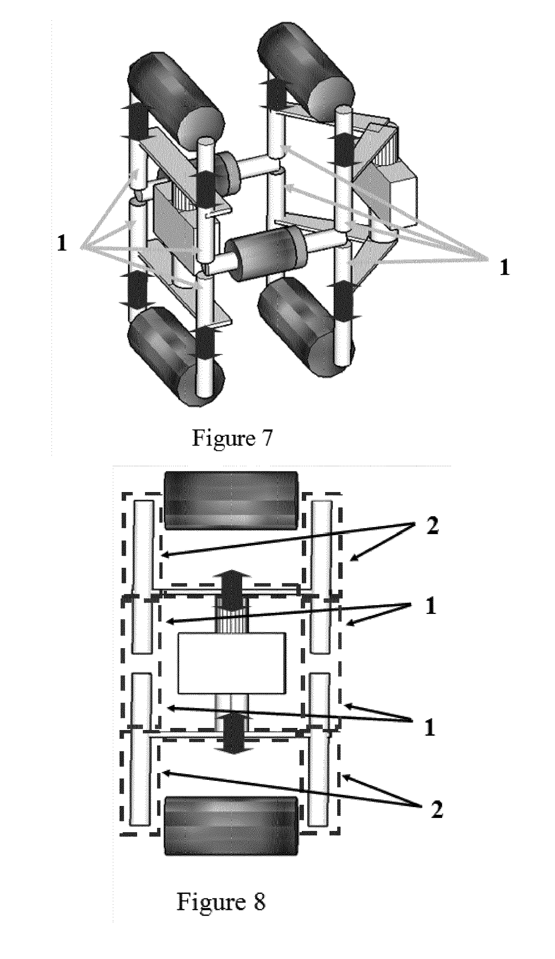

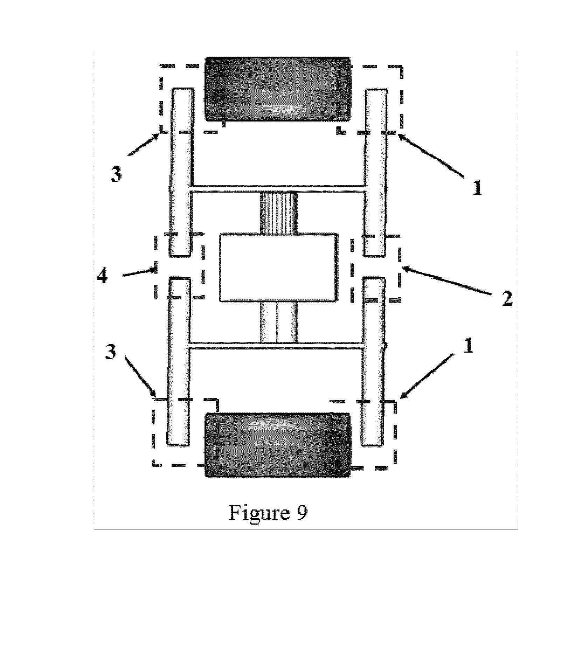

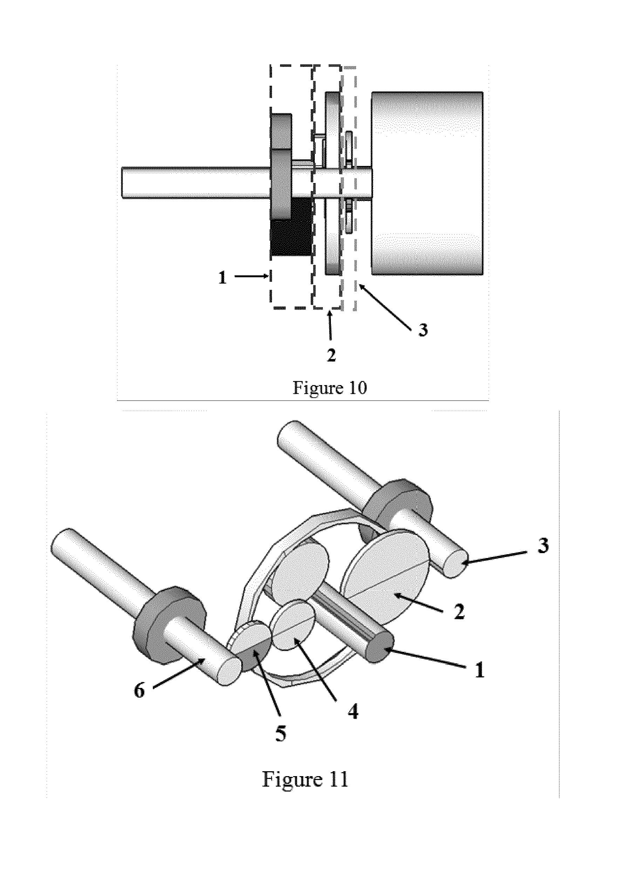

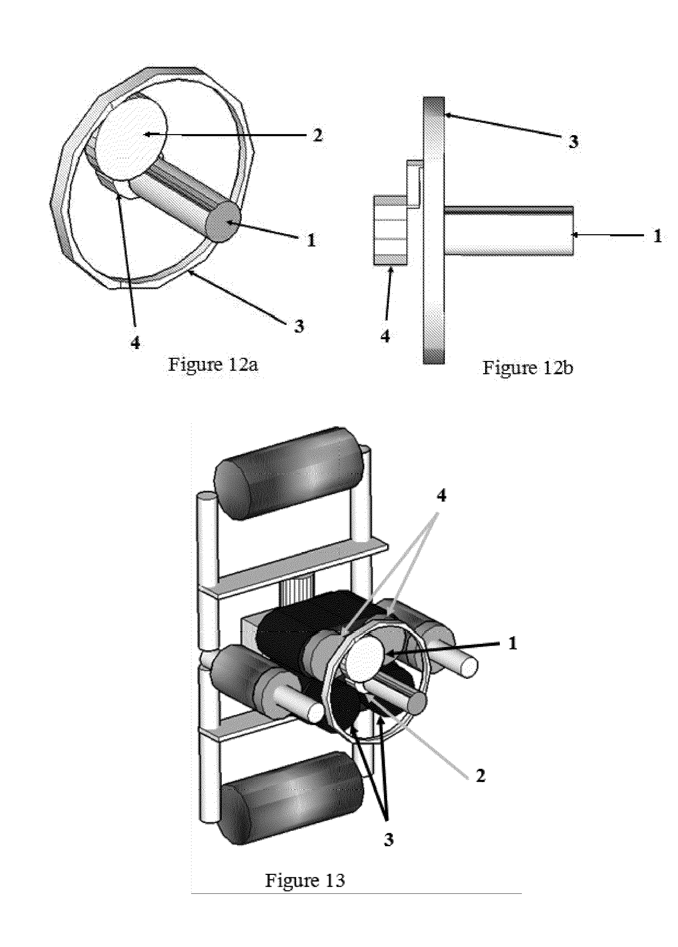

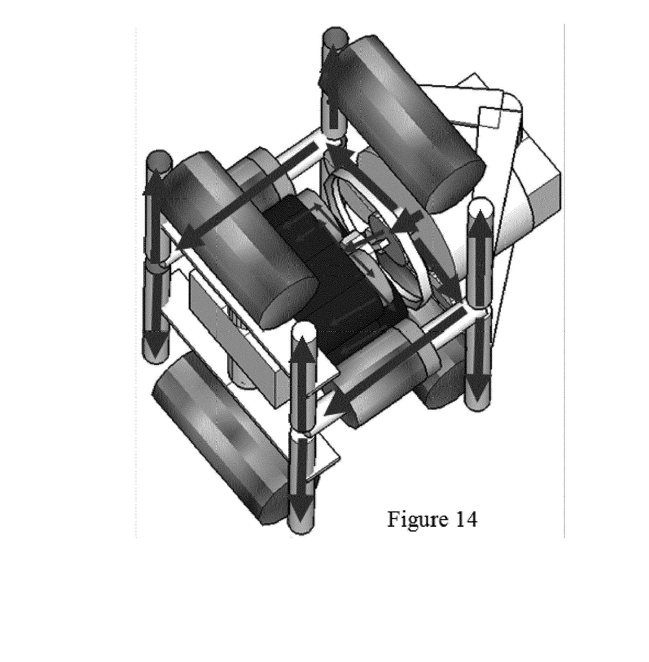

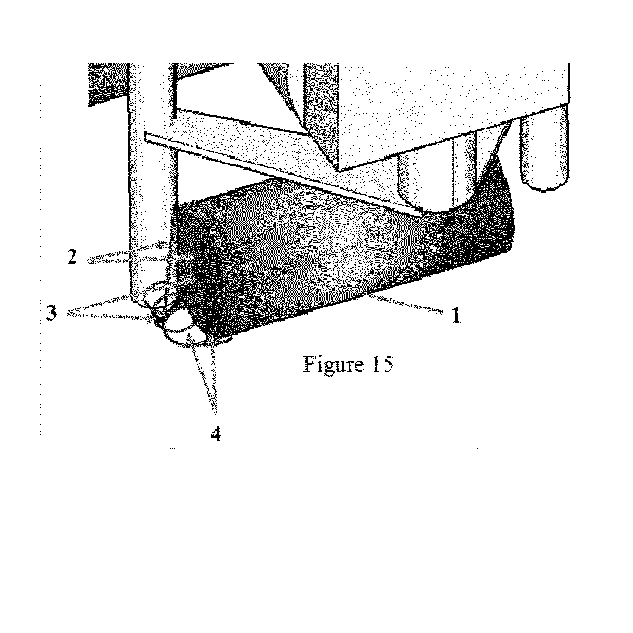

In the following explanation the invention as a whole will be referred to as the "apparatus". Reference is made to Fig. 0, which is a schematic view of the apparatus while in use. In this figure, the apparatus sits on a model of the human bottom row of teeth. The top row of teeth has been hidden for ease of demonstration. Reference is made to figure 1, which shows the apparatus. Number 1 is used as a casing and will be left out of next figures for ease of demonstration. Reference is made to Figure 2, which shows the apparatus without casing. Reference is made to figure 3, which shows a side view of the apparatus. In this figure, the apparatus is divided into 8 parts: Number 1 is the crawler wheel, which enables the apparatus to move between the top and bottom row of teeth and along the row of teeth. Number 2 and 3 are the front and back brushes used to clean the front top- and bottom row of teeth and the back top- and bottom row teeth respectively. These will be referred to as the "outer brushes". Number 4 signifies the two brushes on each side of the crawler wheel, which are used to clean the teeth contact surfaces of the top- and bottom row of teeth. Number 5 signifies a motor element such as a piezo actuator to enable the vertical movement of the number 2 brushes. Same as number 5, number 6 signifies a motor element such as a piezo actuator to enable the vertical movement of the number 3 brushes. Number 7 signifies the electric motor, the battery pack and the wireless communication module. The electric motor enables the movement of all rotating items such as the crawler teeth and the brushes. Reference is made to figure 4, which shows the front view of the apparatus. Number 1 signifies the crawler wheel. Number 2 signifies the front top- and bottom brushes. Number 4 signifies the two brushes on each side of the crawler wheel, which are used to clean the teeth contact surfaces of the top- and bottom row of teeth. Number 5 signifies the motor element such as a piezo actuator. The numbering style of figure 4 is following the number references in figure 3. The figures 0 - 4 and figure 15 show views of the apparatus as a whole. The figures 5 - 13 show the individual parts and individual mechanisms of the apparatus. Reference is made to figure 5, which shows a concept design of the crawling teeth. The crawling teeth have two cylindrical components, two at the top, and two at the bottom. Each of the cylinders is moved individually by the gear mechanism shown in figure 10, number 1. Figure 5 shows that the two cylinders on top are a set distance apart from each other, the two cylinders are moved synchronously by a lace or a belt around both cylinders. This setup of the top pair of cylinders is identical to the bottom pair of cylinders, but at the opposite direction of rotation. In summary, there are four cylinders and two belts in this setup. The cylinders are fixed to the main casing and are stationary relative to each other. The top belt and the bottom belt are in contact along the plane between the bottom and the top cylinders and move at equal speed. As shown in figure 5, the top belt makes contact with the top row of teeth and the bottom belt makes contact with the bottom row of teeth. The following scenario is possible: As each cylinder is actuated, they rotate in the direction shown by the four arrows. The top belt will move in anti-clockwise direction and the bottom belt in the clockwise direction. The pressure of the belts against the teeth and the resulting reaction force will cause the mechanism to move to the right as indicated by the big single arrow. The other scenario is the rotation of the four cylinders in the, respectively, opposite direction causing the resulting movement of the mechanism to the left. The belt can be made of materials such as elastic and flexible rubber to ensure maximum friction against the teeth and cylinders while still being able to move around the cylinders. Reference is made to figure 6, which shows one of the two actuators responsible for the vertical movement of the outer brushes, the front top- and bottom brushes and the back top- and bottom brushes. In this case, the figure shows a piezo actuator, which can extend tubes in the direction shown by the arrows. The circuitry between components has been left out of all drawings for ease of demonstration. Reference is made to figure 7, which shows the connection of the two piezo elements to the brushes. The brushes are attached to tubular beams, as shown by number 1. These beams each have a fixed and a movable part equaling a telescopic cylinder system. The fixed main tube remains stationary while the movable tube, nested within the main tube, can be extracted and retracted with the help of the piezo actuators. The tubes rotate to transfer power to the brushes. The telescopic system provides a means to transfer power to the brushes via rotation, while the vertical height of the brushes can be adjusted. The movable tube and the stationary tube are interlocked around their axis causing them to rotate at the same speed. The movable tube can be extended with the piezo actuators. This is done by a point of contact on each movable tube. This point of contact can be a bearing interlocked with the tube in the vertical direction. Reference is made to figure 8, which shows the movable and the stationary components. While number 1 is stationary, number 2 can be be actuated in the vertical direction. Reference is made to figure 9, which shows the area of interaction between the tube system and the brushes. Area 2 and 4 consist of a bevel gear drive transferring power from the main shaft (not in figure) to the tubes leading to area 1 and 3. Due to the nature of the two main shafts, the direction of rotation transferred to the tubes in area 2 is opposite to the direction of rotation transferred to tubes in area 4. Area 1 and 3 will consist of a spring mechanism to exert pressure on the teeth, while the brushes are rotating. The power transfer to the brush from the tube is done by a flexible shaft system. Such a system consists of a set of wires in a plastic hose. One end of the set of wires is fixed to the tube while the other set of wires is fixed to a freewheel located on the side of the brush. The spring is built into the mechanism to exert a constant pressure between the brush and the tube, resulting in constant pressure between the brush and the teeth. A freewheel is installed on each side of the brush in area 1 and 3 to disable the flexible shaft system exerting power on the brush in a particular direction of rotation. The reason for this is to ensure that the brushes are only rotating in a set direction at any given time. The following scenario (A) is possible: As the electric motor is actuated, it transfers power to the tubes in area 2 in clockwise direction via the bevel gear. The tubes are transferring the power to the flexible shaft system in area 1, which transfers it to the flywheel attached to the brush. As the direction is clockwise, the fly wheel will not transfer the power to the brush. The electric motor transfers the same power to the tubes in area 4 via the bevel gear. The direction of rotation is opposite and therefore anticlockwise. The power is transferred via the tubes to the flexible shaft system in area 3, which transfer the power to the fly wheel attached to the brush. Because the direction of rotation is anticlockwise, the fly wheel enables power transfer to the brush. This causes the brush to rotate anticlockwise. A second scenario (B) is possible: The electric motor moves in the opposite direction. This will make the tubes in area 2 rotate in anticlockwise direction and the tubes in area 4 rotate in clockwise direction. The flywheels will then disable the power transfer in area 3 and enable power transfer in area 1. The resulting rotation of the brush is still anticlockwise. The spring system, the flywheel and the flexible shaft system can not be seen in the figure. An example of a possible spring system is shown in figure 15. Number 1 represents the flywheel fixed to the brush, number 2 represents rigid connections to the spring, number 3 represents the flexible shaft system leading from the tube to the fly wheel and number 4 represents the spring. Reference is made to figure 10, which shows the gear system of the apparatus in more detail. All of the gears have been simplified in the drawings and are shown as cylinders without meshing teeth. The gear system can be separated into three areas. Area 3 distributes the power from the electric motor shaft onto two separate shafts leading to the brushes. One of the shafts turns in clockwise direction and the other in anticlockwise direction. Area 2 is a planetary gear drive, which reduces the rotational speed of the input shaft and transfers it to area 1. Area 1 reduces the speed of the input shaft again and distributes the power to the four cylinder components of the crawler wheel. These areas are shown in detail in figures 11-13. Reference is made to figure 11, which shows the first component of the gear system. Number 1 shows the input shaft coming from the electric motor. The shaft meshes with two gears, number 2 and number 4. Number 2 transfers the power of the input shaft onto the outer shaft number 3. This shaft transfers the power to the outer brushes on one side of the apparatus. Number 4 meshes with another gear, number 5, which meshes with the outer shaft number 6. This shaft transfers power to the outer brushes on the other side of the apparatus. While shaft number 3 rotates in the same direction as shaft number 1, shaft number 6 rotates in the opposite direction. Reference is made to figure 12a and b, which show the planetary gear system. Shaft number 1 is the output shaft from the electric motor and serves as the sun gear in the planetary system. The planet gear number 2 meshes with the sun gear and the annulus gear number 3. For ease of demonstration, only one planet gear is demonstrated in this setup. The planet gear is connected to the output shaft number 4 via an arm bracket. The bracket is connected to the planet gear via a bearing, which sits in the center of the planet gear. Reference is made to figure 13, which shows the interaction between the areas 1 and 2 as mentioned in figure 10. The output shaft of the planetary gear system, number 2, is meshing with two gears, number 3. The two gears number 3 are meshing with shaft number 2 and with the two shafts number 4: The left gear number 3 is meshing with the left gear number 4 and the right gear number 3 is meshing with the right gear number 4 . Each of the four gears number 3 and 4 are connected to the cylinders of the crawler wheel. Reference is made to figure 14, which shows the power transfer from the electric motor to all components. Big arrows indicate power transfer at high rotational speed and small arrows indicate power transfer at low rotational speed. The following parts have been left out for ease of demonstration: Battery pack, wireless communication module, circuitry, sensors and micro controller. The battery pack feeds power to the electric motor and the piezo actuators. The wireless communication module sends and receives information to and from external devices located outside the apparatus. The sensors will collect information about the overall health of the teeth, the cleanliness of the teeth, the position of the teeth, about symptoms of health related diseases, but in the future possibly also information retracted from the saliva inside the mouth area. Possible sensors can be: Ultrasonic sensors, infrared sensors, visual sensors, contact and heat sensors.

### Detailed description of at least one way to carry out the invention:

A description of at least one way of carrying out the invention is as follows: The apparatus is inserted into the human mouth and placed between the incisors (front sharp teeth). The top incisors are in contact with the top side of the crawler wheel and the bottom incisors are in contact with the bottom side of the crawler wheel. On each side of the crawler wheel, a brush is in contact with the contact surfaces of both top- and bottom row of teeth. The top incisors are located between two brushes and the bottom incisors are located between two brushes. As sensors indicate the correct position of the apparatus, the piezo actuators extend the top- and bottom brushes so that the brushes are level with the top- and bottom incisors and the spring mechanism is clamping the apparatus in position. To enable the device, contact sensors must sense the force of the teeth "biting down" on the crawler wheel at all time. The micro controller then triggers the electric motor, which provides power to all brushes and the crawler wheel. The micro controller can adjust the speed of rotation as well as the direction of rotation of the electric motor. The micro controller sends a signal to the electric motor to rotate clockwise at full speed. The crawler wheel enables the apparatus to move along the row of teeth to the left similar to a train on a linear track. As the crawler wheel moves, the outer brushes clean the sides of the teeth while the brushes on each side of the crawler wheel clean the contact surfaces of the teeth. As the apparatus moves, sensors will monitor the position of the outer brushes relative to the teeth and the piezo actuators adjust the position accordingly. As the apparatus approaches the end of the teeth on the left, indicated by a visual or ultrasonic senor, the micro controller will slow the electric motor down and reverse the direction of rotation. The apparatus will move to the right along the row of teeth and finish at the end of the row of teeth as indicated by the sensor. The micro controller will then change the direction of rotation of the electric motor again to stop it at the incisors. The piezo actuators will retract the brushes and the apparatus can be taken out of the mouth. The apparatus is also supposed to provide the hardware for the development of better software regarding the program setup. The following additional feature is also possible: An application on a smart phone sends the trigger signal to the apparatus for it to initialize and carry out the setup. It then uses the various information from the sensors to control the apparatus in terms of speed and accuracy providing real time monitoring and adjustment. After the process, the operator knows about information such as health of teeth, factor of cleanliness, symptoms for diseases, possible recommendations to daily routine etc.

## Claims

1. An apparatus for cleaning and monitoring health of the human teeth. This apparatus can clean human teeth, monitor teeth health, examine teeth and general health status as well as communicating to external devices.

2. The apparatus in claim 1 further comprising the clamping mechanism to hold the apparatus in place within the mouth area. This includes the use of springs, brushes, actuators and sensors.

3. The apparatus in claim 1 further comprising the crawling wheel mechanism to move the apparatus when in contact with the teeth. This includes the cylinder setup, the way of moving when between two objects (such as top and bottom teeth), the belt and the pressure sensors to sense biting force.

4. The apparatus in claim 1 further comprising actuators (in figures represented by piexo actuators) to move the outer brushes as a response to sensor output and position within mouth.

5. The apparatus in claim 1 further comprising the telescopic tubes to transfer power to the outer brushes independent of their position.

6. The apparatus in claim 1 further comprising the gear mechanism to transfer power from the electric motor to all brushes and the crawler wheel.

7. The apparatus in claim 1 further comprising the ability to interact with external devices and the potential of improving and adjusting the run program such as setup actions and process parameters.

8. The apparatus in claim 1 further comprising the ability to interact with external devices and the potential of outsourcing processing power to enable diagnosis and examination of health conditions based on sensor readings.

9. The apparatus in claim 1 further comprising the flexible shaft setup from tube to brush thus enabling a flexible positioning of the brush with spring support.

10. The apparatus in claim 1 further comprising the gear and drive wheel setup necessary for the outer brushes to rotate one direction only, independent of the direction of rotation of the electric motor.

11. The apparatus in claim 1 further comprising the gear setup necessary for a two stage speed reduction (epicyclic stage and single helical stage).
